# EUROPÄISCHE PATENTANMELDUNG

(11) **EP 2 119 874 A1**
(43) Veröffentlichungstag der Anmeldung: **18.11.2009**
(21) Anmeldenummer: 09156787.5
(22) Anmeldetag: 31.03.2009
(51) Int. Cl.: F01D 11/04, F01D 25/12, F02C 7/18, F02C 7/28

(54) **Strömungsmaschine, inbesondere Turbine oder Verdichter**

(30) Priorität: 15.05.2008 CH 7382008
(71) Anmelder: ALSTOM Technology Ltd, 5400 Baden (CH)
(72) Erfinder: Eppler, Volker, 79761 Waldshut-Tiengen (DE); Arzel, Tanguy, 5408 Ennetbaden (CH); Schnieder, Martin, 5408 Ennetbaden (CH)

(57) **Zusammenfassung**

Die vorliegende Erfindung betrifft eine Strömungsmaschine (1), insbesondere eine Turbine oder ein Verdichter, umfassend wenigstens einen Leitschaufelabschnitt (2), der mehrere Leitschaufeln (3) aufweist, die in einen Gaspfad (10) eines Arbeitsgases hineinragen, und wenigstens einen Nachbarabschnitt (6), der mehrere Nachbarelemente (7) aufweist, die den Arbeitsgaspfad (10) seitlich begrenzen. Zwischen den Leitschaufeln (3) des Leitschaufelabschnitts (2) und den Nachbarelementen (7) des Nachbarabschnitts (6) ist ein Spalt (11) ausgebildet, durch den ein Kühlgas in den Arbeitsgaspfad (10) einbringbar ist.

Um den Wirkungsgrad der Strömungsmaschine (1) zu verbessern, sind im Spalt (11) Querdichtungen (14) ausgebildet, die einen Druckausgleich und/oder eine Gasströmung im Spalt (11) in der Querrichtung (5) verhindern oder zumindest behindern.

## Beschreibung

### Technisches Gebiet

Die vorliegende Erfindung betrifft eine Strömungsmaschine, insbesondere eine Turbine oder einen Verdichter.

### Stand der Technik

Üblicherweise besitzt eine Strömungsmaschine zumindest einen Leitschaufelabschnitt, der mehrere, in einer quer zur Hauptströmungsrichtung eines Arbeitsgases verlaufenden Querrichtung nebeneinander angeordneten Leitschaufeln, die in einen Gaspfad des Arbeitsgases hineinragen. Ferner kann bezüglich der Hauptströmungsrichtung stromauf oder stromab an den Laufschaufelabschnitt ein Nachbarabschnitt anschließen, der mehrere in der Querrichtung nebeneinander angeordnete Nachbarelemente aufweist, die den Arbeitsgaspfad seitlich begrenzen. In der Hauptströmungsrichtung kann zwischen Leitschaufeln des Leitschaufelabschnitts und den Nachbarelementen des Nachbarabschnitts ein Spalt ausgebildet sein, der sich in der Querrichtung erstreckt und durch den ein Kühlgas in den Arbeitsgaspfad einbringbar ist.

Das Kühlgas wird dabei in den Spalt eingeleitet, um ein Eindringen des heißen Arbeitsgases in den Spalt zu vermeiden oder zumindest zu reduzieren. Dementsprechend muss das Kühlgas mit einem Druck in den Spalt eingeleitet werden, der gleich groß ist oder größer ist als der Druck im Arbeitsgaspfad.

Der Druck im Arbeitsgaspfad ist gewissen Schwankungen unterworfen. Insbesondere kann beobachtet werden, dass im Betrieb der Strömungsmaschine an Anströmkanten der Leitschaufeln Staupunktdruckwellen entstehen können, die sich entgegen der Hauptströmungsrichtung ausbreiten. Des weiteren können sich Nachlaufdruckwellen an Abströmkanten der Leitschaufeln ausbilden, die sich mit der Hauptströmungsrichtung ausbreiten. Dort wo die Staupunktdruckwellen bzw. die Nachlaufdruckwellen auf den Spalt treffen, herrschen erhöhte Drücke im Arbeitsgas. Um dennoch ein Eindringen von Arbeitsgas in den Spalt vermeiden oder reduzieren zu können, ist der Druck des Kühlgases im Spalt entsprechend erhöht. Insgesamt ist somit relativ viel Kühlgas erforderlich, um ein Einbrechen von heißem Arbeitsgas in den jeweiligen Spalt zu reduzieren bzw. zu vermeiden. Je mehr Kühlgas in den Arbeitsgaspfad eintritt, desto niedriger ist der Wirkungsgrad der Strömungsmaschine. Es besteht daher ein Bedürfnis, die erforderliche Kühlgasmenge zu reduzieren.

### Darstellung der Erfindung

Hier setzt die vorliegende Erfindung an. Die Erfindung, wie sie in den Ansprüchen gekennzeichnet ist, beschäftigt sich mit dem Problem, für eine Strömungsmaschine der eingangs genannten Art eine verbesserte Ausführungsform anzugeben, die sich insbesondere dadurch auszeichnet, dass sie einen reduzierten Kühlgasbedarf aufweist und dementsprechend einen erhöhten Wirkungsgrad besitzen kann.

Dieses Problem wird bei der Erfindung durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Spalt Querdichtungen vorzusehen, die so ausgestaltet sind, dass sie einen Druckausgleich bzw. eine Gasströmung im Spalt in der Querrichtung, also in der Längsrichtung des Spalts verhindern oder zumindest behindern bzw. reduzieren. Diese Bauweise führt dazu, dass in den Bereichen, in denen die Staupunktdruckwelle bzw. die Nachlaufdruckwelle auf den Spalt treffen, eine Ausbreitung der Drücke innerhalb des Spalts in der Querrichtung behindert oder unterbunden wird, wodurch die Strömung des Kühlgases im Spalt und somit die Kühlwirkung verbessert werden können. Eine störende Wechselwirkung der Druckschwankungen mit in der Querrichtung benachbarten Bereiche innerhalb des Spalts lassen sich signifikant reduzieren. Insbesondere ist weniger Kühlgas erforderlich, um eine hinreichende Kühlung zu bewirken, was den Wirkungsgrad der Strömungsmaschine verbessert.

Besonders vorteilhaft ist eine Ausführungsform, bei welcher die Querdichtungen entlang des Spalts so angeordnet sind, dass erste Spaltabschnitte, in denen eine Staupunktdruckwelle der jeweiligen Leitschaufel oder eine Nachlaufdruckwelle der jeweiligen Leitschaufel auf den Spalt trifft, von dazu benachbarten zweiten Spaltabschnitten getrennt sind. Hierdurch werden die ersten Spaltabschnitte mit den darin durch die Druckwellen induzierten Druckschwankungen von den zweiten Spaltabschnitten entkoppelt, wodurch dort der Einfluss der genannten Druckwellen erheblich reduziert werden kann.

Besonders vorteilhaft ist eine Weiterbildung, bei welcher das Kühlgas in den ersten Spaltabschnitten mit einem höheren Druck in den Spalt eingeleitet wird als in den zweiten Spaltabschnitten. Die Erfindung nutzt hierbei die Erkenntnis, dass in den zweiten Spaltabschnitten der Kühlgasdruck erheblich reduziert werden kann, um eine hinreichende Kühlung bzw. einen hinreichenden Schutz vor eintretenden heißen Arbeitsgas gewährleisten zu können, als dies für die ersten Spaltabschnitte erforderlich ist. Auf diese Weise kann die erforderliche Kühlgasmenge durch den reduzierten Druck in den zweiten Spaltabschnitten erheblich reduziert werden, was den Wirkungsgrad der Strömungsmaschine erhöht.

Weitere wichtige Merkmale und Vorteile der erfindungsgemäßen Strömungsmaschine ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: eine stark vereinfachte prinzipielle Draufsicht auf eine Strömungsmaschine im Bereich einer Leitschaufel,
- Fig. 2: eine vergrößerte Schnittansicht im Bereich eines Spalts,
- Fig. 3: eine Ansicht wie in Fig. 2, jedoch bei einer anderen Ausführungsform,
- Fig. 4: einen stark vereinfachten, prinzipiellen Längsschnitt einer Strömungsmaschine im Bereich einer Leitschaufel,
- Fig. 5: ein stark vereinfachter Querschnitt der Strömungsmaschine im Bereich einer Leitschaufel entsprechend Schnittlinien V in Fig. 4.

### Wege zur Ausführung der Erfindung

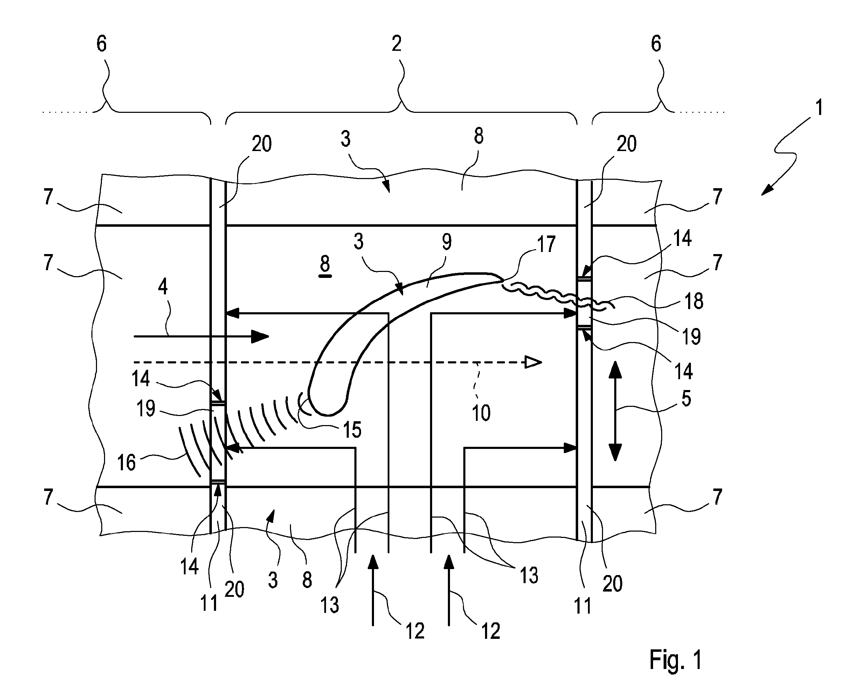

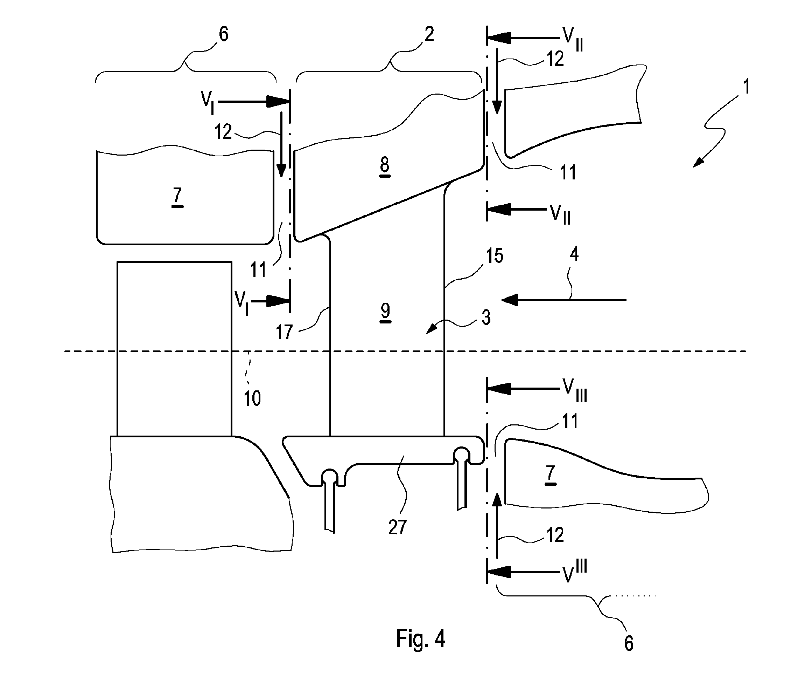

Entsprechend Fig. 1 und 4 umfasst eine Strömungsmaschine 1 zumindest einen Leitschaufelabschnitt 2, der hier durch eine geschweifte Klammer gekennzeichnet ist. Dieser Leitschaufelabschnitt 2 weist mehrere Leitschaufeln 3 auf, die in einer quer zu einer durch einen Pfeil angedeuteten Hauptströmungsrichtung 4 eines Arbeitsgases verlaufenden, durch einen Doppelpfeil angedeuteten Querrichtung 5 nebeneinander angeordnet sind. In dem in Fig. 1 dargestellten Abschnitt der Strömungsmaschine 1 ist nur eine einzige Leitschaufel 3 vollständig im Profil erkennbar.

Bevorzugt handelt es sich bei der Strömungsmaschine 1 um eine rotierende Strömungsmaschine, wie z.B. eine Turbine oder einen Verdichter. Bevorzugt handelt es sich um eine Turbine, insbesondere um eine Gasturbine oder um eine Dampfturbine. Die Strömungsmaschine 1 weist dann üblicherweise einen Stator und einen darin um seine Längsmittelachse drehbaren Rotor auf. Die Rotationsachse definiert dabei die Axialrichtung der Strömungsmaschine 1. Die Hauptströmungsrichtung 4 verläuft dabei parallel zur Axialrichtung, während die Querrichtung 5 bezüglich dieser Rotationsachse in einer Umfangsrichtung der Strömungsmaschine 1 verläuft. Die Blickrichtung in Fig. 1 entspricht dann bezüglich der Rotationsachse einer radialen Richtung der Strömungsmaschine 1. Beim Arbeitsgas der Strömungsmaschine 1 handelt es sich bevorzugt um ein heißes Verbrennungsgas, das in der Turbine entspannt wird. Sofern die Strömungsmaschine 1 als rotierende Strömungsmaschine ausgestaltet ist, handelt es sich bei dem Leitschaufelabschnitt 2 um eine Leitschaufelreihe der Strömungsmaschine 1.

Entsprechend den Fig. 1 und 4 weist die Strömungsmaschine 1 bezogen auf die Hauptströmungsrichtung 4 stromauf und stromab jeweils einen an den gezeigten Leitschaufelabschnitt 2 abschließenden Nachbarabschnitt 6 auf, der jeweils durch eine geschweifte Klammer symbolisiert ist. Der jeweilige Nachbarabschnitt 6 weist mehrere Nachbarelemente 7 auf, die in der Querrichtung 5 nebeneinander angeordnet sind.

Die jeweilige Leitschaufel 3 umfasst einen plattformartigen Fußkörper 8 sowie einen Profilkörper 9, der vom Fußkörper 8 absteht und in der vorliegenden Darstellung im Profil erkennbar ist. Die jeweilige Leitschaufel 3 ragt somit mit ihrem Profilkörper 9 in einen Gaspfad 10 des Arbeitsgases hinein oder hindurch, der hier durch eine unterbrochene Linie angedeutet ist. Im Unterschied dazu ragen die Nachbarelemente 7 nicht in den Arbeitsgaspfad 10 hinein, sondern bilden eine seitliche Begrenzung für den Arbeitsgaspfad 10. Bei den Nachbarelementen 7 kann es sich beispielsweise um Hitzeschutzschildelemente handeln, die zwischen zwei in der Hauptströmungsrichtung 4 benachbarten Leitschaufelabschnitten 2 angeordnet sein können oder die in einer Brennkammer angeordnet sein können, die stromauf an den ersten Leitschaufelabschnitt 2 anschließen kann. Ebenso kann es sich bei den Nachbarelementen 7 um Laufschaufeln handeln. Die Nachbarelemente 7 können sich am Innendurchmesser oder am Außendurchmesser befinden. Somit kann es sich bei den hier benachbarten Elementen grundsätzlich um eine Leitschaufel, ein Hitzeschild bzw. eine Brennkammerauskleidung handeln.

In der Hauptströmungsrichtung 4 ist jeweils zwischen den Fußkörpern 8 bzw. Leitschaufeln 3 des jeweiligen Leitschaufelabschnitts 2 und den Nachbarelementen 7 des jeweiligen Nachbarabschnitts 6 ein Spalt 11 ausgebildet. Der jeweilige Spalt 11 erstreckt sich dabei in der Querrichtung 5. Der jeweilige Spalt 11 ist an eine Kühlgaszuführeinrichtung 12 angeschlossen, die hier durch Pfeile angedeutet ist und die über entsprechende Kanäle oder Leitungen 13 zum jeweiligen Spalt 11 führt. Die jeweiligen Leitungen oder Kanäle 13 sind hierbei ebenfalls durch Pfeile bzw. Pfeillinien vereinfacht dargestellt. Somit ist über den jeweiligen Spalt 11 ein Kühlgas in den Arbeitsgaspfad 10 einbringbar. Dabei dient das in den jeweiligen Spalt 11 eingebrachte Kühlgas in erster Linie dazu, ein Eintreten des heißen Arbeitsgases in den Spalt 11 zu verhindern. Zusätzlich sollen die im Bereich des Spalts 11 dem Heißgas ausgesetzten Oberflächen durch das Kühlgas gekühlt werden.

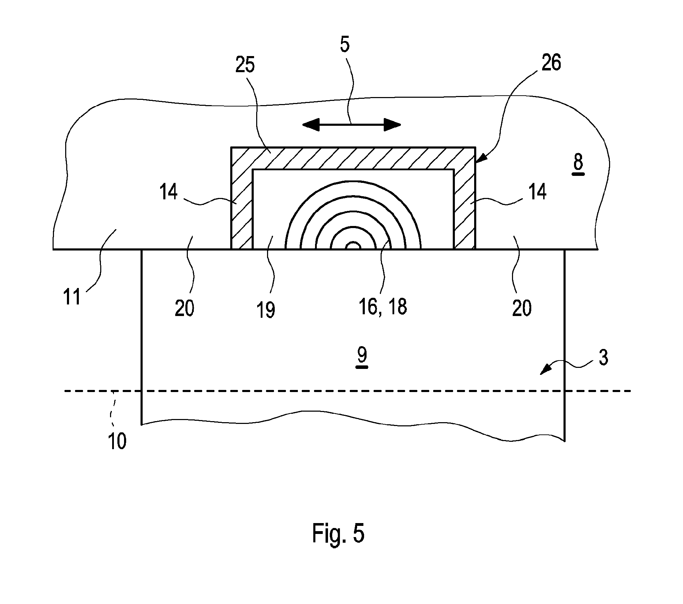

Erfindungsgemäß sind im jeweiligen Spalt 11 Querdichtungen 14 ausgebildet. In den Fig. 1 und 5 sind diese vereinfacht dargestellt. Diese Querdichtungen 14 sind so ausgestaltet, dass sie im Spalt 11 in der Querrichtung 5 einen Druckausgleich bzw. eine Gasströmung verhindern oder zumindest behindern oder reduzieren. Mit Hilfe der Querdichtungen 14 können somit Strömungen in der Querrichtung 5 innerhalb des Spalts 11 mehr oder weniger unterbunden werden. Hierdurch können Druckschwankungen, die in den Spalten 11 lokal auftreten können, in der Querrichtung 5 auf bestimmte Abschnitte des Spalts 11 begrenzt werden, um Wechselwirkungen mit anderen Spaltabschnitten zu reduzieren.

Beispielsweise kann sich im Betrieb der Strömungsmaschine 1 gemäß Fig. 1 ausgehend von einer Anströmkante 15 der Leitschaufel 3 bzw. des Profilkörpers 9 eine Staupunktdruckwelle 16 entgegen der Hauptströmungsrichtung 4 ausbreiten. Ebenso kann sich ausgehend von einer Abströmkante 17 der Leitschaufel 3 bzw. des Profilkörpers 9 eine Nachlaufdruckwelle 18 ausbilden, die sich in der Hauptströmungsrichtung 4 ausbreitet. Innerhalb der jeweiligen Druckwelle 16 bzw. 18 kann es zu erheblichen Druckschwankungen, insbesondere zu Druckerhöhungen kommen. Die Druckwellen 16, 18 überstreichen bzw. überfahren auch die Spalte 11, wodurch es im jeweiligen Spalt 11 lokal zu Druckschwankungen kommen kann. Durch die Querdichtungen 14 kann nun eine Ausbreitung dieser Druckschwankungen innerhalb des jeweiligen Spalts 11 reduziert bzw. vermieden werden.

Vorteilhaft ist dabei eine Ausführungsform, bei welcher die Querdichtungen 14 im Bereich der Staupunktdruckwelle 16 bzw. im Bereich der Nachlaufdruckwelle 18 angeordnet sind. Entsprechend einer besonderen Ausgestaltung können die Querdichtungen 14 gemäß Fig. 1 und 5 entlang des jeweiligen Spalts 11 gezielt so angeordnet werden, dass im jeweiligen Spalt 11 erste Spaltabschnitte 19 in der Querrichtung 5 von zweiten Spaltabschnitten 20 getrennt bzw. separiert werden. Die ersten Spaltabschnitte 19 sind dabei so positioniert, dass in den ersten Spaltabschnitten 19 die Staupunktdruckwelle 16 bzw. Nachlaufdruckwelle 18 auf den jeweiligen Spalt 11 trifft. Die jeweiligen zweiten Spaltabschnitte 20 schließen dann in der Querrichtung 5 unmittelbar an die jeweiligen ersten Spaltabschnitte 19 an.

Zweckmäßig kann nun vorgesehen sein, die Kühlgasversorgung 12 so auszugestalten, dass das Kühlgas in den ersten Spaltabschnitten 19 jeweils mit einem höheren Druck in den Spalt 11 eingeleitet wird als in den zweiten Spaltabschnitten 20. Beispielsweise können hierzu separate Leitungen bzw. Kanäle 13 vorgesehen sein, die beispielsweise unterschiedlich gedrosselt sind und/oder unterschiedlich gesteuert werden können. Hierdurch ist es möglich, in den jeweiligen Spaltabschnitten 19 bzw. 20 den Druck für das Kühlgas, also letztlich die jeweils zugeführte Kühlgasmenge gezielt auf den jeweiligen lokalen Bedarf anzupassen. Dieser lokale Kühlgasbedarf ist in den ersten Spaltabschnitten 19 aufgrund der durch die Druckwellen 16 bzw. 18 verursachten Druckschwankungen größer als in den benachbarten zweiten Spaltabschnitten 20, in denen die besagten Druckschwankungen nicht auftreten. Da bei der Auslegung einer herkömmlichen Strömungsmaschine 1 davon ausgegangen wird, dass die durch die Druckwellen 16 bzw. 20 erzeugten Druckschwankungen im gesamten Spalt 11 auftreten und der Kühlgasdruck und somit die Kühlgasmenge entsprechend dimensioniert werden, lässt sich die insgesamt benötigte Kühlgasmenge bei der erfindungsgemäßen Strömungsmaschine 1 erheblich reduzieren, da nur noch in den ersten Spaltabschnitten 19 die Druckwellen 16, 18 berücksichtigt werden müssen.

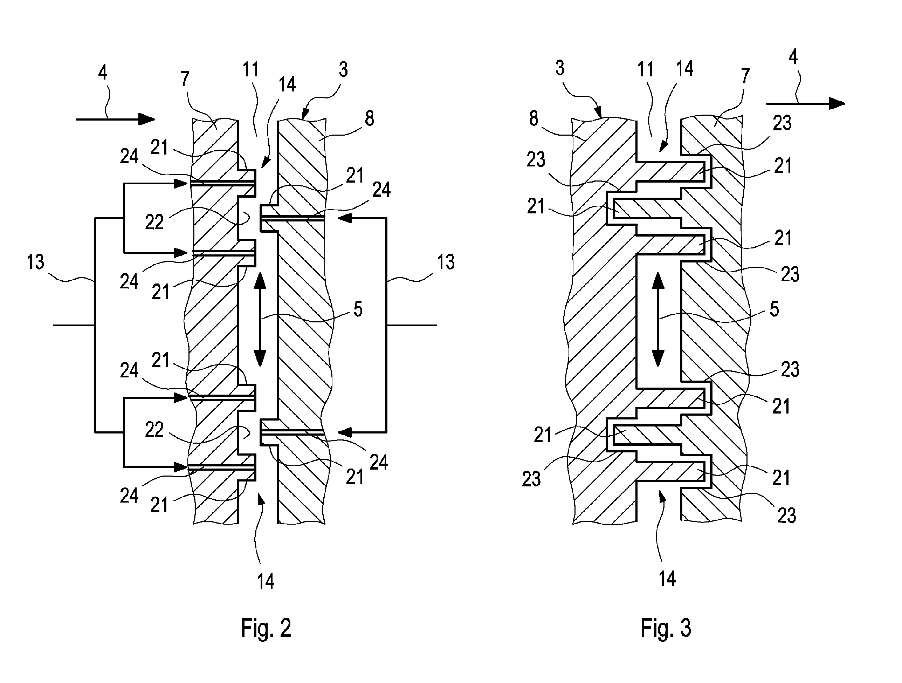

Entsprechend den Fig. 2 und 3 können die Querdichtungen 14 Zapfen oder Stege 21 aufweisen. Diese stehen im Spalt 11 von der jeweiligen Leitschaufel 3 bzw. von deren Fußkörper 8 sowie vom jeweiligen Nachbarelement 7 in der Hauptströmungsrichtung 4 ab. Hierdurch kann eine labyrinthartige Struktur erzeugt werden, die eine Gasströmung im Spalt 11 in der Querrichtung 5 drosselt. Bei der in Fig. 2 gezeigten Ausführungsform erstrecken sich die einzelnen Zapfen oder Stege 21 in der Hauptströmungsrichtung 4 soweit, dass die beispielsweise an der Leitschaufel 3 ausgebildeten Zapfen oder Stege 21 nicht in Zwischenräume 22 eintauchen, die in der Querrichtung 5 zwischen benachbarten Zapfen oder Stegen 21 des Nachbarelements 7 vorhanden sind. Bei einer anderen Ausführungsform können die Zapfen bzw. Stege 21 in der Hauptströmungsrichtung 4 so dimensioniert sein, dass die einen Zapfen oder Stege 21 in besagte Zwischenräume 22 in der Hauptströmungsrichtung 4 eintauchen, wodurch die Dichtungswirkung erheblich verbessert werden kann.

Entsprechend Fig. 3 können die Querdichtungen 14 außerdem Aufnahmen oder Nuten 23 aufweisen, die so positioniert und dimensioniert sind, dass jeweils ein gegenüberliegend angeordneter Zapfen oder Steg 21 in die jeweilige Aufnahme oder Nut 23 eintauchen bzw. eingreifen kann. Hierdurch lässt sich die Dichtungswirkung der so geschaffenen Labyrinthdichtung nochmals erheblich verbessern.

Entsprechend Fig. 2 kann gemäß einer vorteilhaften Ausführungsform vorgesehen sein, zumindest bei einigen der Zapfen oder Stege 21 Kühlgaskanäle 24 vorzusehen, durch die Kühlgas in den jeweiligen Spalt 11 einleitbar ist. Gleichzeitig kann durch die gewählte Kühlgasführung eine Kühlung der exponierten Zapfen oder Stege 21 realisiert werden.

Die Zapfen oder Stege 21 können so geformt sein, dass sie eine Längsrichtung aufweisen, die sich sowohl zur Hauptströmungsrichtung 4 als auch zur Querrichtung 5 senkrecht erstreckt. Besagte Längsrichtung erstreckt sich bezüglich der Schnittebenen der Fig. 2 und 3 senkrecht. Sofern die Strömungsmaschine 1 eine Rotationsachse besitzt, erstrecken sich besagte Längsrichtungen der Zapfen oder Stege 21 bezüglich dieser Rotationsachse radial.

Die Querdichtungen 14 können bevorzugt so gestaltet werden, dass die Anbringung anderer Dichtungen im jeweiligen Spalt 11 nicht beeinträchtigt wird. Beispielsweise kann im Spalt 11 zwischen dem jeweiligen Nachbarelement 7 und einem hier nicht gezeigten Träger des Nachbarelements 7 eine sich in der Querrichtung 5 erstreckende Dichtung vorgesehen sein. Eine entsprechende Dichtung kann auch am Fußkörper 8 der jeweiligen Leitschaufel 3 vorgesehen sein, um diesen im Spalt 11 gegenüber einem Träger abzudichten, an dem die jeweilige Leitschaufel 3 befestigt ist.

Fig. 5 zeigt vereinfacht eine Ausführungsform, bei welcher eine solche, sich in der Querrichtung 5 erstreckende Dichtung 25 vorgesehen ist. Diese Dichtung 25 erstreckt sich dabei zwischen zwei benachbarten Querdichtungen 14. Diese Dichtung 25 wird im Folgenden auch als Längsdichtung bezeichnet, da sie sich senkrecht zu den Querdichtungen 14 erstreckt. Die Längsdichtung 25 ist bei der in Fig. 5 gezeigten besonderen Ausführungsform so ausgestaltet, bzw. dimensioniert, dass sie die beiden Querdichtungen 14 miteinander verbindet bzw. an diese anschließt. Hierdurch wird der erste Spaltabschnitt 19 in der Querrichtung 5 durch die beiden Querdichtungen 14 und in radialer Richtung, und zwar an einer vom Gaspfad 10 abgewandten Seite durch die Längsdichtung 25 begrenzt. Die auf diese Weise zusammenwirkenden Dichtungen 14, 25 bilden eine Art Dichtungsbox 26, welche den ersten Spaltabschnitt 19 kapselt bzw. vom übrigen Spalt 11 trennt. Hierdurch haben die darin einlaufenden Druckwellen 16 bzw. 18 keine oder nur eine stark reduzierte Auswirkung auf die Drücke im übrigen Spalt 11. Wie in Fig. 4 angedeutet, kann eine derartige Dichtungsbox 26 radial außen am Fuß 8 der Leitschaufel 3 im stromab liegenden Spalt 11 (Schnitt V_{I}-V_{I}) und/oder radial außen am Fuß 8 im Spalt 11 stromauf der Leitschaufel 3 (Schnitt V_{II}-V_{II}) und/oder an einem Kopf 27 der Leitschaufel 3 im Spalt 11 stromauf der Leitschaufel 3 vorhanden sein (Schnitt V_{III}-V_{III}).

Entsprechend einer besonders vorteilhaften Ausführungsform können die jeweilige Leitschaufel 3 und das jeweilige Nachbarelement 7 hinsichtlich ihrer Dimensionierung so aufeinander abgestimmt sein, dass der jeweilige Spalt 11 bei abgekühlter Strömungsmaschine 1 offen ist, während er sich bei zunehmender Temperatur zunehmend verschließt, so dass er geschlossen ist, wenn die Strömungsmaschine 1 ihre Betriebstemperatur erreicht.

Zweckmäßig kann ferner vorgesehen sein, die Anzahl der in Umfangsrichtung benachbarten Leitschaufeln 3 sowie die Anzahl der in Umfangsrichtung benachbarten Nachbarelemente 7 so aufeinander abzustimmen, dass sie gleich sind oder ganzzahlige Vielfache bilden. Beispielsweise sind gleich viele oder doppelt so viele Leitschaufeln 3 wie Nachbarelemente 7 vorhanden.

Darüber hinaus kann der jeweilige Spalt 11 in der Hauptströmungsrichtung 4 angestellt sein, derart, dass das Kühlgas mit einer parallel zur Hauptströmungsrichtung 4 verlaufenden Geschwindigkeitskomponente aus dem Spalt 11 austritt und in den Arbeitsgaspfad 10 eintritt.

### Bezugszeichenliste

- 1: Strömungsmaschine
- 2: Leitschaufelabschnitt
- 3: Leitschaufel
- 4: Hauptströmungsrichtung
- 5: Querrichtung
- 6: Nachbarabschnitt
- 7: Nachbarelement
- 8: Fußkörper
- 9: Profilkörper
- 10: Arbeitsgaspfad
- 11: Spalt
- 12: Kühlgasversorgungseinrichtung
- 13: Leitung/Kanal
- 14: Querdichtung
- 15: Anström kante
- 16: Staupunktdruckwelle
- 17: Abström kante
- 18: Nachlaufdruckwelle
- 19: erster Spaltabschnitt
- 20: zweiter Spaltabschnitt
- 21: Zapfen oder Steg
- 22: Zwischenraum
- 23: Aufnahme oder Nut
- 24: Kühlgaskanal
- 25: Dichtung
- 26: Dichtungsbox
- 27: Kopf

## Patentansprüche

1. Strömungsmaschine, insbesondere Turbine oder Verdichter,
- mit wenigstens einem Leitschaufelabschnitt (2), insbesondere Leitschaufelreihe, der mehrere, in einer quer zur Hauptströmungsrichtung (4) eines Arbeitsgases verlaufenden Querrichtung (5) nebeneinander angeordnete Leitschaufeln (3) aufweist, die in einen Gaspfad (10) des Arbeitsgases hineinragen,
- mit wenigstens einem bezüglich der Hauptströmungsrichtung (4) stromauf oder stromab an den Leitschaufelabschnitt (2) anschließenden Nachbarabschnitt (6), der mehrere, in der Querrichtung (5) nebeneinander angeordnete Nachbarelemente (7) aufweist, die den Arbeitsgaspfad (10) seitlich begrenzen,
- wobei zwischen den Leitschaufeln (3) des Leitschaufelabschnitts (2) und den Nachbarelementen (7) des Nachbarabschnitts (6) ein Spalt (11) ausgebildet ist, der sich in der Querrichtung (5) erstreckt und durch den ein Kühlgas in den Arbeitsgaspfad (10) einbringbar ist,
- wobei im Spalt (11) Querdichtungen (14) ausgebildet sind, die einen Druckausgleich und/oder eine Gasströmung im Spalt (11) in der Querrichtung (5) verhindern oder zumindest behindern.

2. Strömungsmaschine nach Anspruch 1,
**dadurch gekennzeichnet,**
**dass** die Querdichtungen (14) im Bereich einer Staupunktdruckwelle (16) der jeweiligen Leitschaufel (3) oder im Bereich einer Nachlaufdruckwelle (18) der jeweiligen Leitschaufel (3) angeordnet sind.

3. Strömungsmaschine nach Anspruch 1 oder 2,
**dadurch gekennzeichnet,**
**dass** die Querdichtungen (14) entlang des Spalts (11) so angeordnet sind, dass erste Spaltabschnitte (19), in denen eine Staupunktdruckwelle (16) der jeweiligen Leitschaufel (3) oder eine Nachlaufdruckwelle (18) der jeweiligen Leitschaufel (3) auf den Spalt (11) trifft, von dazu benachbarten zweiten Spaltabschnitten (20) getrennt sind.

4. Strömungsmaschine nach Anspruch 3,
**dadurch gekennzeichnet,**
**dass** das Kühlgas in den ersten Spaltabschnitten (19) mit einem höheren Druck in den Spalt (11) eingeleitet wird als in den zweiten Spaltabschnitten (20).

5. Strömungsmaschine nach einem der Ansprüche 1 bis 4,
**dadurch gekennzeichnet,**
**dass** die Querdichtungen (14) Zapfen oder Stege (21) aufweisen, die im Spalt (11) in der Hauptströmungsrichtung (4) von der jeweiligen Leitschaufel (3) und/oder vom jeweiligen Nachbarelement (7) abstehen.

6. Strömungsmaschine nach Anspruch 5,
**dadurch gekennzeichnet,**
**dass** die Zapfen oder Stege (21) eine Längsrichtung aufweisen, die sich quer zur Hauptströmungsrichtung (4) und quer zur Querrichtung (5) erstreckt.

7. Strömungsmaschine nach Anspruch 5 oder 6,
**dadurch gekennzeichnet,**
**dass** die Querdichtungen (14) Aufnahmen oder Nuten (23) aufweisen, die im Spalt (11) in der Hauptströmungsrichtung (4) den Zapfen oder Stegen (21) gegenüberliegend in der jeweiligen Leitschaufel (3) und/oder im jeweiligen Nachbarelement (7) ausgebildet sind.

8. Strömungsmaschine nach Anspruch 7,
**dadurch gekennzeichnet,**
**dass** die Zapfen oder Stege (21) in der Hauptströmungsrichtung (4) in die Aufnahmen oder Nuten (23) eingreifen.

9. Strömungsmaschine nach einem der Ansprüche 5 bis 8,
**dadurch gekennzeichnet,**
**dass** zumindest einige der Zapfen oder Stege (21) jeweils wenigstens einen Kühlgaskanal (24) aufweisen, durch den Kühlgas in den Spalt (11) einleitbar ist.

10. Strömungsmaschine nach einem der Ansprüche 1 bis 9,
**dadurch gekennzeichnet,**
**dass** die Strömungsmaschine (1) als rotierende Strömungsmaschine ausgestaltet ist, die einen Stator und einen um seine Längsmittelachse rotierenden Rotor aufweist, wobei die Hauptströmungsrichtung (4) axial verläuft und die Querrichtung (5) in Umfangsrichtung verläuft, während eine Längsrichtung gegebenenfalls vorhandener Zapfen oder Stege (21) radial verläuft.

11. Strömungsmaschine nach einem der Ansprüche 1 bis 10,
**dadurch gekennzeichnet,**
**dass** die Leitschaufeln (3) und die Nachbarelemente (7) hinsichtlich ihrer Dimensionierung so aufeinander abgestimmt sind, dass der jeweilige Spalt (11) bei abgekühlter Strömungsmaschine (1) offen ist und geschlossen ist, wenn die Strömungsmaschine (1) ihre Betriebstemperatur aufweist.

12. Strömungsmaschine nach einem der Ansprüche 1 bis 11,
**dadurch gekennzeichnet,**
- **dass** im Spalt (11) zwischen dem jeweiligen Nachbarelement (7) und einem Träger, an dem das Nachbarelement (7) angebracht ist, eine Dichtung vorgesehen ist, die sich in der Querrichtung (5) erstreckt, und/oder
- **dass** im Spalt (11) zwischen den jeweiligen Leitschaufeln (3) und einem Träger, an dem die Leitschaufel (3) angebracht ist, eine Dichtung vorgesehen ist, die sich in der Querrichtung (5) erstreckt.

13. Strömungsmaschine nach einem der Ansprüche 1 bis 12,
**dadurch gekennzeichnet,**
**dass** der Spalt (11) in der Hauptströmungsrichtung (4) angestellt ist, derart, dass Kühlgas mit einer parallel zur Hauptströmungsrichtung (4) verlaufende Geschwindigkeitskomponente aus dem Spalt (11) austritt und in den Gaspfad (10) eintritt.
